# EUROPEAN PATENT SPECIFICATION

(11) **EP 0 593 793 B1**
(45) Date of publication and mention of the grant of the patent: **07.01.1998**
(21) Application number: 92117699.6
(22) Date of filing: 19.10.1992
(51) Int. Cl.: F02M 25/00

(54) **Stimulators for fuel combustion**
Verbrennungsbrennstoffstimulatoren
Stimulateurs de combustion

(43) Date of publication of application: 27.04.1994
(73) Proprietor: Boric, Miroslav, Split, 21000 (HR); Boric, Mario, Split, 21000 (HR)
(72) Inventor: Boric, Miroslav, Split, 21000 (HR); Boric, Mario, Split, 21000 (HR)
(74) Representative: Tiedtke, Harro, Dipl.-Ing.

(56) References cited:
- DE-A- 4 040 235
- GB-A- 1 518 602
- GB-A- 1 541 056
- US-A- 3 180 324
- US-A- 4 408 573
- PATENT ABSTRACTS OF JAPAN vol. 10, no. 273 (M-518) 17 September 1986 & JP-A-61 096 305 (SUKEO TSURUMI) 15 May 1986

## Description

The invention relates to a fuel combustion stimulating device according to the preamble of claim 1 used for the stimulation and improvement of fuel combustion in engineering applications. Burning stimulators comprise:
a) A water jet directly injected into the combustion chamber
b) An electric spark, lightning or arc introduced directly into the combustion chamber close to the water jet.

Stimulators for fuel combustion are designed to be used in engineering for:
- Heavy marine diesel engines for ship propulsion and for land-based diesel power plants installations,
- Gas turbines
- Steam boilers driven by any kind of fuel
- Other large industrial fuel consumers.

Fuel oil has so far been injected by a high pressure fuel pump through a fuel valve directly into the cylinder of the diesel engine or other combustion chambers. Recently, however, there has been a tendency of water injection into the diesel engine cylinder. This method has been successfully applied by the British EMULSA system. This system provided the injection of the emulsion consisting of water and fuel oil into the diesel engine cylinder.

Combustion stimulation provided by the EMULSA system, using the emulsion of fuel oil mixed with 10% of water, was described in "MARINE PROPULSION" No 5/82. BEN LINE Shipping Co., who first applied this system in a container ship, declaring fueil oil savings up to 7%, due to microexplosions causing the secondary fuel atomisation and better combustion. This is an indirect system of water injection into the diesel engine cylinder. The EMULSA system should be welcomed and accepted as a leading system in the contemporary practice.

Its main deficiency, however, is caused by the low temperature of the water used in the emulsion, due to the preheating temperature of fuel oil required to maintain correct injection viscosity. This temperature ranges between 100 and 130°C, depending on fuel oil quality. Due to low water temperature the combustion and the microexplosion intensity is limited.

From the US-A-3180324 a fuel combustion stimulating device is known comprising a high pressure water pump for supplying a high pressurized water and a high pressure superheater for heating said high pressurized water. The embodiment disclosed in this document a Otto-engine with a carburetor. Hence, each cylinder is provided with an intake port for a fuel-air mixture and, on the other hand, there is a valve means for injecting the superheated water into the engine. This valve means comprises a port for suppliance of a control oil for controlling the timing and duration of the injection of superheated water. Furthermore, it is mentioned that the device can also be employed within a diesel engine. In this case, one opening in the above mentioned valve means is used for the insertion of an additional fuel injection valve instead of a spark plug which has been inserted therein in case of an Otto-engine.

It is the object of the present invention to provide a system which shows an improved efficiency when a combustion stimulation is performed by using water together with fuel oil for the combustion in e.g. a diesel engine.

This object is achieved by the features according to claim 1. Further improvements of the present invention are the subject matter of the dependent claims.

The installation designed provides the use of the water over the critical state, superheated prior to injection into the combustion chamber of the diesel engine, gas turbine, steam boilers or other large industrial combustion installations. Superheated in this way, the water will remain liquid as long as it is in the critical state, thereby keeping its highly accumulated thermal energy.

The newly designed dual injector according to claim 1 provides a simultaneous and separate injection of fuel oil and superheated water. The dual injector must conform to the normal running conditions of the engine, even if the engine should operate with its superheated water supply being disconnected.

The main burning stimulator is the superheated water in the critical state, while a further improvement of another fuel combustion stimulator is electricity conducted through electrodes into the combustion chamber in the form of an electric spark, lightnings or arc, acting on superheated water particles at a very high temperature, much higher than the temperature caused by the burning of the fuel. Acting on drops of water with high enthalpy, both thermally and electrically, the electric spark, lightnings and arc will increase the ionisation in the cylinder in order to dissolve the water drops into their molecular and atomic components for enhanced burning and microexplosions.

Due to highly accumulated enthalpy, received prior to injectin, water in the critical state (WICS) jumps the evaporation phase outside the combustion chamber, which is not the case with the EMULSA system of injection. Direct injection eliminates the presence of steam in the cylinder, causing fire extinguishing effects on flame.

Both stimulators, i.e. water in the critical state and the electrical stimulation, could be in use at the same time.

Electrical stimulators produced and prepared outside the combustion chamber and connected by electrodes with the cylinder or the other combustion chambers, should provide the normal running operation of the diesel engine or any other installation even with the electricity supply disconnected.

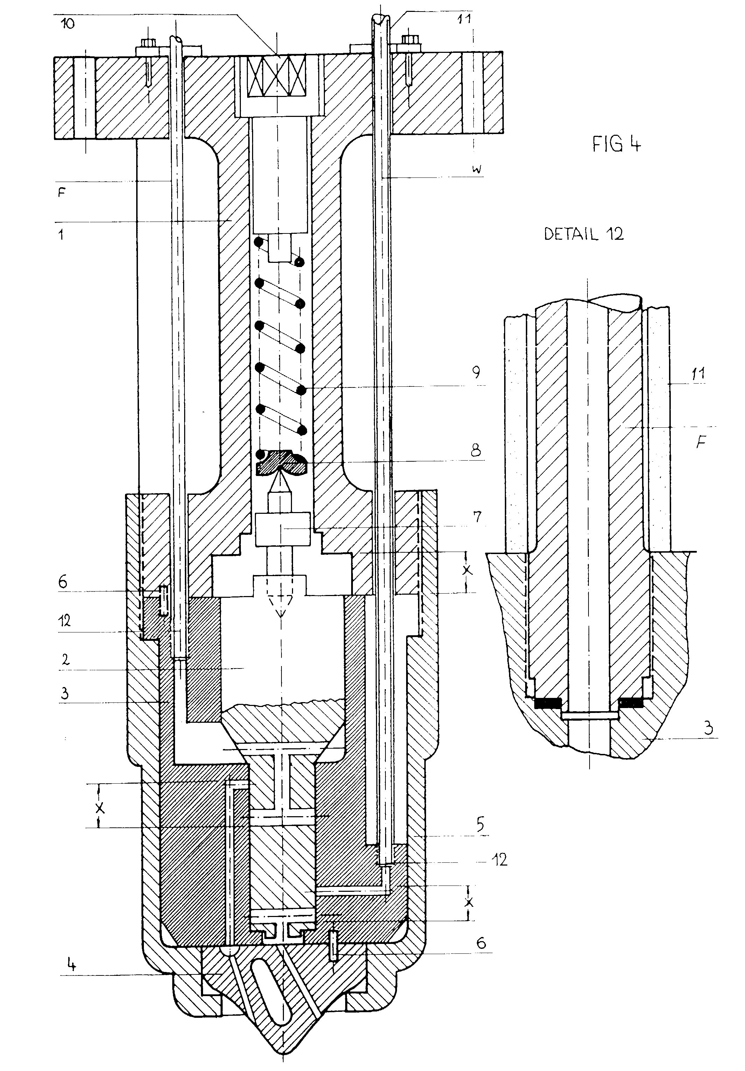

Dual injector (DI) in Fig. 4 shows the direct injection unit, designed to be applied in diesel engines, gas turbines, steam boilers and other power installations, respectively.

Since the time at our disposal for physical changes in the combustion chamber is very limited, the burning process will be analysed by the following diagram:

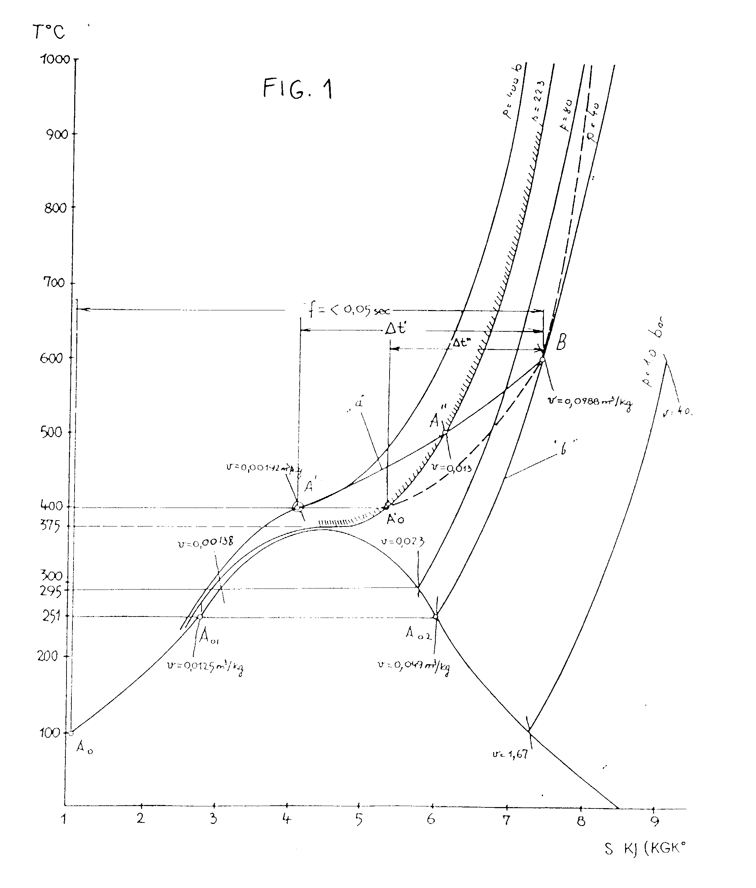

Fig. 1 T-S diagram illustrates the relation between the change in the water condition when injected by the EMULSA system and when injected by the WICS system. Curve "b" shows the EMULSA system. In this system cold water is preheated up to 120°C prior to injection and partly evaporates into the diesel engine cylinder after the injection, during the lag time of 0.05 sec., which is at disposal for evaporation and superheating before the fuel ignition. The steam produced in this way reduces microexplosions and has the fireextinguishing effects on flame.

Water superheating temperature shown by curve "b", reaches the compressed air temperature on its way from A01 - AO2 - B while the the WICS curve "a" shows high enthalpy received prior to injection outside the engine. Entering the cylinder, WICS hits the compressed air heated to its top temperature on its way from A¹0 - B, and needs shorter time to accept a small additional quantity of energy in the cylinder. Dotted line illustrates the water injected in WICS at 400°C and 230 bars. In this case WICS remains liquid, without steam and without the possibility of the fireextinguishing effect on flame, thus stimulating microexplosions soon after the fuel ignition. Drops of WICS in touch with flame become better thermally ionised than with EMULSA.

The electrical stimulation with its very high temperature will additionally increase the thermal ionisation in the cylinder acting on the drops of WICS with both electrical and thermal effects. It will tend to dissolve and destroy drops of WICS into their molecular and atomic components for additional burning and microexplosions. One way of carrying out the invention is described in detail below with reference to drawings which illustrate only one specific embodiment in which:

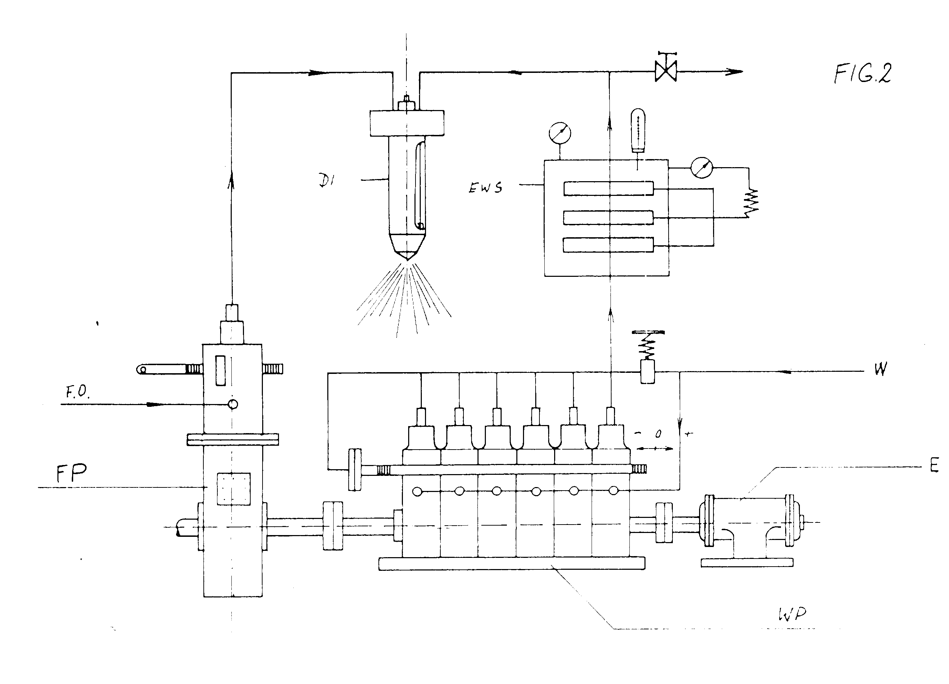

Fig. 2 illustrates the assembled installation design for diesel engine application consisting of the following main parts:
- high pressure fuel oil pump (FP)
- high pressure water supply pump (WP)
- high pressure electric water superheater (EWS)
- dual injector (DI)

Installations for gas turbines, steam boilers and other industrial large fuel consumers are similar except for the high pressure fuel pump (FP), where a common gear pump should be used for the supply of fuel oil at constant pressure.

High pressure multipiston water pump (WP) equipped with the unit for easy capacity control and driven by diesel engine or directly coupled with the electric motor (E), regardless of injection timing, supplies water (W) of about 60°C into a common high pressure electric water superheater (EWS) under constant pressure over 230 bars and superheated to 400°C. From the superheater WICS is distributed to each dual injector (DI) fitted in each cylinder cover of the diesel engine. Timing of water injection is simultaneous with and piloted by the fuel injection timing, but the quantity of water injected into the cylinder is constant and limited with the inlet diameter in the nozzle cap.

Dual injector is designed to provide the continuous engine operation if WICS / electric stimulators are disconnected from the power supply.

In the cylinder cover, close to dual injector, a pair of electrodes is installed for electrical stimulation of fuel combustion, Claim 2.

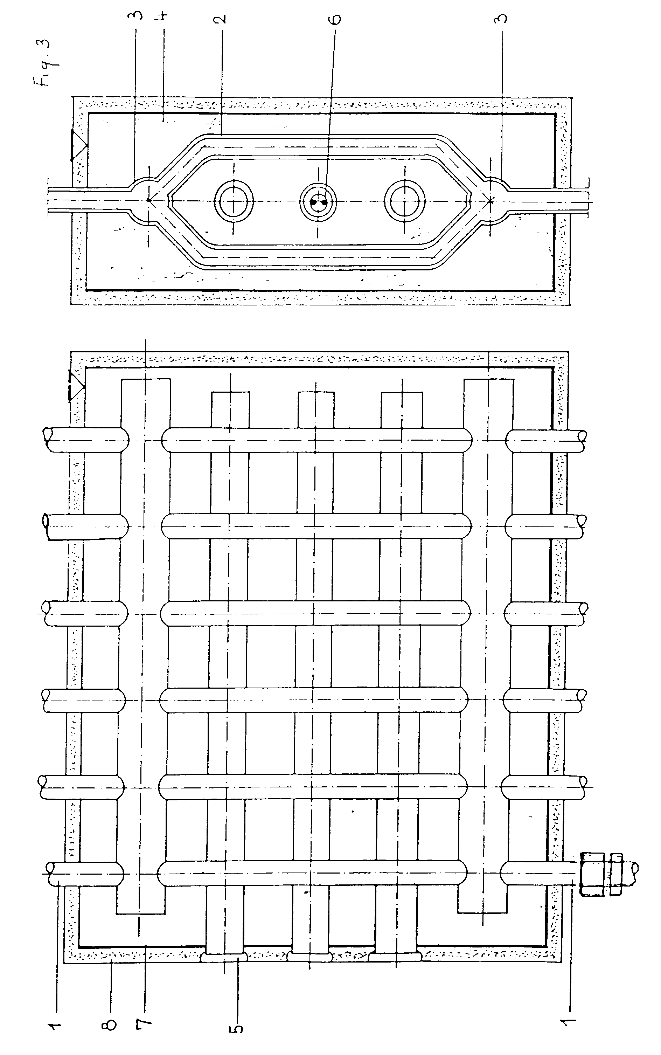

Fig. 3 illustrates a high pressure electric water superheater (EWS), consisting of the following parts: high pressure pipes (1) and (2) welded to one inlet and one outlet duct (3) fully inserted into a casting mould box (7) in such a way that pipes (1) pass waterproofly through the bottom of the casting mould box. In the same way between the pipes (2) are inserted pockets (5) for heating elements (6). After that the mould box is filled with the liquid cast metal (4) (brass, lead, aluminium or another alloy) in order to serve as a heat transfer medium from heating elements to the water. The water superheater is completely thermally insulated (8) from outside and equipped with control and measuring instruments. Pipes (1) on inlet and outlet side have fitted pipe connections for the easy replacement of the heater. Pipes from the superheater to dual injectors are thermally insulated too.

Fig. 4 illustrates a dual injector (DI), for the injection of fuel oil and superheated water in the critical state into the combustion chamber. It consists of the following parts: the fuel oil inlet pipe (F) bypasses the injector body (1) and is connected to the nozzle (3), (see detail 12) or welded to the top surface of the nozzle. Water pipe (W) also bypasses the body (1) and the machined part of the nozzle (3) and is connected with it (as in detail 12) or welded. On its outer side the pipe is additionally insulated and encapsulated with a special porcelaine or china clay tube (11). The body (1), the nozzle (3) and the nozzle cap (4) are fastened together with the cap nut (5). The pressure of the fuel oil valve opening is adjusted with a bolt (10) via a spring (9), a thrust piece (8), a thrust pin (7) presses the needle (2). The nozzle cap (4) has separate channels, one for fuel oil and another for WICS. In order to reduce heat transfer from water to the fuel oil, between the channels in the nozzle cap there is some empty space. Pins (6) fix joint parts and protect them when tightening. Needle (2) lifts stroke "X" with the fuet oil impulse, opening both channels at the same time, and fuel oil and water are injected simultaneously into the diesel engine cylinder or into another combustion chamber.

Electric combustion stimulators arc implemented with electrodes installed close to dual injection tip, through which electricity is conducted - sparking, lightnings or arc being produced in separate electric machinery outside the engine and the combustion space. The intensity of the sparking and lightnings are much stronger than the ignition spark used in Otto engines. The two cannot even be compared, since an electric spark is not necessary for diesel engine ignition.

Very high temperature of sparking, lightnings and arc (over 5000° K) is much higher than the temperature produced by fuel flame during fuel ignition in the cylinder (abt. 2400° K).

Accordingly, ionisation of the mixture of fuel, air and water in the cylinder will increase additionally and superheated drops of water will be additionally attacked thermally and electrically in order to dissolve drops of water into their molecular and atomic components for additional burning and microexplosions.

Electrical stimulators for combustion in gas turbines, boilers and other combustion chambers are built in basically the same way. 1. Lightning is produced in Tesla inductor. 2. Sparking is produced in transformers with primary and secondary coils in resonance, and sparking is a function of oscillation. 3. Electric arc produced for this purpose will be based on technology in practice. Such electrical stimulation should provide a continuous supply of electricity, both with the pulse system of fuel oil supply and with the continuous pressure system fuel oil supply.

## Claims

1. Fuel combustion stimulating device comprising
a high pressure water pump (WP) for supplying a high pressurized water,
a high pressure superheater (EWS) for heating said high pressurized water,
a dual injector valve and a fuel pump supplying fuel to said dual injector valve,
said dual injector valve comprising
a fuel delivery pipe (F) and
a separate water delivery pipe (W),
**characterized in that**
said high pressure water pump is a multicylinder high pressure water pump (WP) pressurizing the water up to at least 230 bars,
said high pressure superheater (EWS) is a high pressure electric water superheater heating the water up to at least 400°C so that the water is brought into the critical state before entering the dual injector valve
said dual injector valve further comprises a dual injector needle device (2) which is adapted to perform a simultaneous injection of the fuel and the superheated water into a combustion chamber through separate nozzle ports.

2. Fuel combustion stimulating device according to claim 1,
**characterized by**
electrical stimulators based on sparking, lightnings or electric arc by means of a pair of electrodes installed on each cylinder cover of a combustion chamber close to the tip of said dual injector valve.

3. Fuel combustion stimulating device according to claim 2,
**characterized in that**
in one electrode block of said pair of electrodes several conductors are installed for each spark, lightning or electric arc, to which terminals from each generator machine are connected.

4. Fuel combustion stimulating device according to claim 1,
**characterized in that** said high pressure superheater (EWS) comprises
pipes (1, 2) being welded to one inlet and one outlet tube duct (3) and fully inserted into a casting mould box (7),
pockets (5) for electric heating elements (6) being located between said pipes (2), whereby all inlet pipes (1) pass watertightly water through the bottom of said mould box (7), whereby, after inserting the pipe construction, said mould box (7) is filled with molten metal (4) like brass, aluiminum, lead or other alloys to be used as heat transfer medium from heating elements to said metal and from said metal to the water, whereby said superheater (EWS) and said pipes outside are thermally insulated (8) and equipped with control and measuring instruments, while inlet and outlet pipes are furnished with tube connections for easy replacement of the heater.

5. Fuel combustion stimulating device according to claim 1,
**characterized in that** said dual injector valve comprises
a valve body (1),
a fuel pipe (F) bypassing said body (1) and connected or being welded to an upper surface of a nozzle (3) being inserted in said body (1),
said body (1), said nozzle (3), a needle (2), a nozzle cap (4) and a center pin (6) being fastened together with a cap nut (5),
a bolt (10) for setting a fuel pressure via a spring (9), a thrust piece (8), a thrust pin (7) and said needle (2),
a water pipe (W) on the opposite side of said fuel pipe (F) bypassing said body (1) and a partly machined side of said nozzle (3), whereby said water pipe (W) being connected or welded on a lower side of said nozzle (3),
whereby said water pipe (W) is additionally insulated with a pipe (11) of china clay, and
said nozzle cap (4) has separate channels, one for fuel and another for superheated water in the critical state, between the channels there is an empty space in order to insulate heat transfer from the water to the fuel, and
said needle (2) is raisable about a distance "X", opening both channels at once caused by a fuel impulse from a high pressure fuel pump,
whereby timing of superheated water in the critical state is piloted by the simultaneous setting of the fuel pump timing.

6. Fuel combustion stimulating device according to any of the preceeding claims, **characterized in that**
it is applicable in gas turbine combustion chambers, in which case a gear fuel oil pump is provided for a constant pressure delivery instead of said high pressure fuel oil pump (FP).

7. Fuel combustion stimulating device according to any of the preceeding claims, **characterized in that**
it is applicable in steam boilers, whereby, when coal powder is used for burning in the combustion chamber, initial heating of the boiler may be performed with fuel oil and, after that, the fuel oil pipe may be used for water supply to said dual injector valve, so that said dual injector valve should be adapted for different kinds of fuel.

8. Fuel combustion stimulating device according to any of the preceeding claims, **characterized in that**
it is applicable in all industrial equipments using combustion chambers with large fuel consumption being adapted thereto.

## Patentansprüche

1. Kraftstoffverbrennungsstimulationsvorrichtung, aufweisend
eine Hochdruckwasserpumpe (WP) zur Lieferung eines Wassers mit hohem Druck;
einen Hochdrucküberhitzer (EWS) zum Aufheizen des Hochdruckwassers;
ein Dualeinspritzerventil und eine Kraftstoffpumpe, die Kraftstoff an das Dualeinspritzerventil liefert;
wobei das Dualeinspritzerventil eine Kraftstoffversorgungsleitung (F) und eine separate Wasserversorgungsleitung (W) aufweist,
**dadurch gekennzeichnet, daß** die Hochdruckwasserpumpe eine Mehrzylinderhochdruckwasserpumpe (WP) ist, die das Wasser auf mindestens 230 bar unter Druck setzt,
daß der Hochdrucküberhitzer (EWS) ein elektrischer Hochdruckwasserüberhitzer ist, der Wasser auf mindestens 400 Grad Celsius aufheizt, so daß das Wasser in den kritischen Zustand gebracht wird, bevor es in das Dualeinspritzerventil gelangt,
daß das Dualeinspritzerventil desweiteren eine Dualeinspritzernadelvorrichtung (2) aufweist, die dazu angepaßt ist, eine gleichzeitige Einspritzung des Kraftstoffs und des überhitzten Wassers durch separate Düsenöffnungen in die Verbrennungskammer durchzuführen.

2. Kraftstoffverbrennungsstimulationsvorrichtung gemäß Anspruch 1, **gekennzeichnet durch** elektrische Stimulatoren, basierend auf Funken, Blitze oder elektrischen Bögen mittels einem Elektrodenpaar, das auf jeder Zylinderabdeckung einer Verbrennungskammer nahe der Spitze des Dualeinspritzerventils installiert ist.

3. Kraftstoffverbrennungsstimulationsvorrichtung gemäß Anspruch 2, **dadurch gekennzeichnet, daß** in einem Elektrodenblock eines Elektrodenpaares mehrere Leiter für jeden Funken, Blitz oder elektrischen Bogen installiert sind, die mit Anschlüssen von jeder Generatormaschine verbunden sind.

4. Kraftstoffverbrennungsstimulationsvorrichtung gemäß Anspruch 1, **dadurch gekennzeichnet, daß** der Hochdrucküberhitzer (EWS) folgendes aufweist:
Leitungen (1, 2), die an ein Einlaß- und ein Auslaßrohr (3) geschweißt sind und vollständig in ein Gußformgehäuse (7) eingesetzt sind,
Taschen (5) für elektrische Heizelemente (6), die zwischen den Leitungen (2) angeordnet sind, wodurch alle Einlaßleitungen (1) wasserdicht Wasser durch den Boden des Gußformgehäuses (7) strömen läßt, wodurch das Gußformgehäuse (7) nach dem Einsetzen der Leitungskonstruktion mit geschmolzenem Metall (4) wie Messing, Aluminium, Blei oder anderen Legierungen gefüllt wird, um als Wärmeübertragungsmedium von den Heizelementen zu dem Metall und von dem Metall zum Wasser verwendet zu werden, wobei der Überhitzer (EWS) und die Leitungen (8) außerhalb thermisch isoliert sind und mit Regelungs- und Meßinstrumenten ausgestattet sind, während die Einlaß- und Auslaßleitungen mit Rohrverbindungen zum einfachen Austausch des Heizgerätes ausgestattet sind.

5. Kraftstoffverbrennungsstimulationsvorrichtung gemäß Anspruch 1, **dadurch gekennzeichnet, daß** das Dualeinspritzerventil folgendes aufweist:
einen Ventilkörper (1),
eine Kraftstoffleitung (F), die den Körper (1) umgeht und mit einer oberen Oberfläche einer Düse (3), die in dem Körper (1) eingesetzt ist, verbunden oder damit verschweißt ist,
wobei der Körper (1), die Düse (3), eine Nadel (2), eine Düsenkappe (4) und ein Mittelstift (6) zusammen mit einer Kappenmutter (5) befestigt sind,
einen Schraubenbolzen (10) zum Einstellen eines Kraftstoffdruckes über eine Feder (9), ein Vorspannstück (8), ein Vorspannstift (7) und die Nadel (2),
eine Wasserleitung (W) auf der gegenüberliegenden Seite der Kraftstoffleitung (F), die den Körper (1) und eine teilweise bearbeitete Seite der Düse (3) umgeht, wobei die Wasserleitung (W) auf einer unteren Seite der Düse (3) verbunden oder damit verschweißt ist,
wobei die Wasserleitung (W) zusätzlich mit einem Rohr (11) aus Kaolin isoliert ist, und
die Düsenkappe (4) separate Kanäle hat, einen für Kraftstoff und einen anderen für überhitztes Wasser im kritischen Zustand, wobei zwischen den Kanälen ein Leerraum ist, um eine Wärmeübertragung vom Wasser auf den Kraftstoff zu isolieren und
wobei die Nadel (2) um eine Distanz "X" anhebbar ist, wobei sie beide Kanäle gleich öffnet, hervorgerufen durch einen Kraftstoffimpuls von einer Hochdruckkraftstoffpumpe,
wobei das Timing von überhitztem Wasser im kritischen Zustand durch das gleichzeitige Einstellen des Kraftstoffpumpentimings gesteuert wird.

6. Kraftstoffverbrennungsstimulationsvorrichtung gemäß einem der vorangehenden Ansprüche, **dadurch gekennzeichnet, daß** sie in Gasturbinenverbrennungskammern anwendbar ist, wobei in diesem Fall eine Zahnradkraftstoffpumpe für eine konstante Drucklieferung anstelle der Hochdruckkraftstoffpumpe (FP) vorgesehen ist.

7. Kraftstoffverbrennungsstimulationsvorrichtung gemäß einem der vorangehenden Ansprüche, **dadurch gekennzeichnet, daß** sie in Dampfboilern anwendbar ist, wobei, wenn Kohlepulver zur Verbrennung in der Verbrennungskammer verwendet wird, die Anfangserhitzung des Boilers mit Kraftstoff durchgeführt werden kann und danach die Kraftstoffleitung für die Wasserversorgung zum Dualeinspritzerventil verwendet werden kann, so daß das Dualeinspritzerventil an unterschiedliche Kraftstoffarten angepaßt sein sollte.

8. Kraftstoffverbrennungsstimulationsvorrichtung gemäß einem der vorangehenden Ansprüche, **dadurch gekennzeichnet, daß** sie in allen industriellen Ausrüstungen verwendbar ist, die Verbrennungskammern mit großen Kraftstoffverbrauch verwenden, die dazu angepaßt sind.

## Revendications

1. Stimulateur de combustion de carburant, comprenant
une pompe à eau haute pression (WP) destinée à fournir de l'eau avec une pression élevée ;
un surchauffeur haute pression (EWS) destiné à chauffer l'eau sous haute pression ;
une soupape d'injection duale et une pompe à carburant, qui achemine le carburant vers la soupape d'injection duale ;
la soupape d'injection duale étant munie d'une conduite d'alimentation en carburant (F) et d'une conduite d'alimentation en eau (W) séparée,
caractérisé en ce que la pompe à eau haute pression est une pompe à eau haute pression à plusieurs cylindres (WP) qui soumet l'eau à une pression de 230 bar minimum,
en ce que le surchauffeur haute pression (EWS) est un surchauffeur d'eau haute pression électrique, qui chauffe l'eau jusqu'à une température de 400 degrés Celsius minimum, de sorte que l'eau atteint l'état critique avant de parvenir dans la soupape d'injection duale,
en ce que la soupape d'injection duale est munie en outre d'un injecteur dual à aiguille (2), qui est conçu pour injecter simultanément le carburant et l'eau surchauffée dans la chambre de combustion par des orifices de buse séparés.

2. Stimulateur de combustion de carburant selon la revendication 1, caractérisé par des stimulateurs électriques, basés sur des étincelles, des décharges électriques ou des arcs électriques produits à l'aide d'une paire d'électrodes, installées sur chaque couvercle de cylindre d'une chambre de combustion, à proximité de la tête de la soupape d'injection duale.

3. Stimulateur de combustion de carburant selon la revendication 2, caractérisé en ce que plusieurs conducteurs pour chaque étincelle, chaque décharge électrique ou chaque arc électrique sont installés dans un bloc d'électrodes d'une paire d'électrodes, lesquels conducteurs sont reliés aux dispositifs de connexion de chaque générateur.

4. Stimulateur de combustion de carburant selon la revendication 1, caractérisé en ce que le surchauffeur haute pression (EWS) comprend les éléments suivants :
des conduites (1, 2) qui sont soudées contre un tube d'arrivée et un tube d'évacuation (3) et sont disposées intégralement dans une carcasse en fonte (7),
des poches (5) pour éléments de chauffage électriques (6) qui sont situées entre les conduites (2) , grâce auxquelles toutes les conduites d'arrivée (1) laissent circuler l'eau de manière imperméable par le socle de la carcasse en fonte (7), grâce auxquelles, après la pose de l'ensemble des conduites, on remplit la carcasse en fonte (7) avec du métal fondu (4), tels que le laiton, l'aluminium, le plomb ou tout autre alliage, afin de l'utiliser comme milieu de transmission de la chaleur des éléments de chauffage vers le métal et du métal vers l'eau, le surchauffeur (EWS) et les conduites (8) étant isolés thermiquement par l'extérieur et étant équipés d'instruments de réglage et de mesure, alors que les conduites d'arrivée et d'évacuation sont équipées de raccords de tubulures pour faciliter le remplacement de l'appareil de chauffage.

5. Stimulateur de combustion de carburant selon la revendication 1, caractérisé en ce que la soupape d'injection duale est munie des éléments suivants :
un corps de soupape (1),
une conduite de carburant (F), qui entoure le corps de soupape (1) et qui est assemblée ou soudée à une surface supérieure d'une buse (3) qui est montée dans le corps de soupape (1),
le corps de soupape (1), la buse (3), une aiguille (2), un couvercle de buse (4) et une goupille centrale (6) étant fixés ensemble par un capuchon fileté (5),
un boulon fileté (10) destiné à régler la pression du carburant par l'intermédiaire d'un ressort (9), d'une pièce de précontrainte (8), d'une tige de précontrainte (7) et de l'aiguille (2),
une conduite d'eau (W) sur le côté opposé à la conduite de carburant (F), qui entoure le corps de soupape (1) et une face partiellement usinée de la buse (3), la conduite d'eau (W) étant assemblée ou soudée à une face inférieure de la buse (3),
la conduite d'eau (W) étant en outre isolée par un tube (11) en kaolin, et
le couvercle de la buse (4) étant muni de canaux séparés, un pour le carburant et un autre pour l'eau surchauffée à un état critique, une cavité étant réalisée entre les canaux, afin d'isoler une transmission de chaleur allant de l'eau vers le carburant, et
l'aiguille (2) pouvant être remontée sur une distance « X », laquelle aiguille, par ce mouvement provoqué par une impulsion du carburant provenant de la pompe à carburant sous haute pression, ouvre simultanément les deux canaux,
le réglage de l'eau surchauffée à un état critique étant commandé par un réglage simultané de la distribution de la pompe à carburant.

6. Stimulateur de combustion de carburant selon l'une quelconque des revendications précédentes, caractérisé en ce qu'il est possible de l'exploiter dans les chambres de combustion des turbines à gaz, auquel cas il est prévu de remplacer la pompe à carburant haute pression (FP) par une pompe à carburant à engrenages permettant de fournir une pression constante.

7. Stimulateur de combustion de carburant selon l'une quelconque des revendications précédentes, caractérisé en ce qu'il est possible de l'exploiter dans les chaudières à vapeur, auquel cas, si la combustion dans la chambre de combustion est produite avec de la poussière de charbon, le chauffage initial de la chaudière est assuré par le carburant et ensuite la conduite de carburant peut être utilisée pour l'alimentation en eau vers la soupape d'injection duale, de sorte que la soupape d'injection duale doit être adaptée à différents types de carburant.

8. Stimulateur de combustion de carburant selon l'une quelconque des revendications précédentes, caractérisé en ce qu'il est possible de l'exploiter dans tous les équipements industriels, dans lesquels les chambres de combustion, qui sont adaptées à cet effet, exigent une forte consommation de carburant.
